Europäisches Patentamt

European Patent Office

Office européen des brevets

(11) Veröffentlichungsnummer: **0 369 416**
**A2**

## EUROPÄISCHE PATENTANMELDUNG

(21) Anmeldenummer: **89121109.6**

(51) Int. Cl.⁵: **F16C 27/00**

(22) Anmeldetag: **15.11.89**

(30) Priorität: **18.11.88 CH 4281/88**

(43) Veröffentlichungstag der Anmeldung:
**23.05.90 Patentblatt 90/21**

(84) Benannte Vertragsstaaten:
**DE FR GB IT SE**

(71) Anmelder: **KERN & CO. AG**

**CH-5001 Aarau(CH)**

(72) Erfinder: **Hoffmann, Dieter**
**Gartenweg 2**
**CH-5033 Buchs(CH)**
Erfinder: **Scholian, Thomas**
**Gysulastrasse 68**
**CH-5022 Rombach(CH)**

(54) **Vorrichtung zur Lagerung einer Welle.**

(57) Eine Welle (1) ist über einen Zwischenträger (8) und ein Stützlager (6) in einem Träger (13) derart gelagert dass sie seitlichen Verschiebungen des Stützlagers (6) durch Verkippungen um kleine Winkel alpha und beta zwanglos folgen kann. Dies wird dadurch erreicht, dass eine (3) von zwei Wellenführungen (2, 3) im Zwischenträger (8) nur oben und unten zwei kurze Gleitnasen (4, 5) aufweist und dass der Zwischenträger (8) nur seitlich über zwei diametral angeordnete kurze Auflageflächen (11, 12) am Träger (13) befestigt ist. Eine Anwendung ist bei Winkelgebern in Theodoliten vorteilhaft.

Fig. 1
SCHNITT A-A

EP 0 369 416 A2

## Vorrichtung zur Lagerung einer Welle

Die Erfindung betrifft eine Vorrichtung zur Lagerung einer Welle in einem Träger mit einem Hauptlager und einem Stützlager.

Zur Lagerung von Wellen sind Lageranordnungen mit Haupt-und Stützlager bekannt. Ueblicherweise ist die Welle im Hauptlager auch in axialer Richtung geführt. Im Messinstrumentenbau wird z.B. bei Drehwinkelgebern und Theodoliten der Winkelsensor möglichst nah beim Hauptlager angeordnet, um Messfehler zu minimieren. Der Winkelsensor besteht aus der Ableseinheit mit einer Abtastplatte, Welche an einem Lagerflansch des Hauptlagers befestigt sind, und dem Teilkreis mit einer Strichteilung, der auf der Welle befestigt ist. Um hohe Ablesegenauigkeiten zu erreichen, soll der Abstand in axialer Richtung zwischen der Abtastplatte und dem Teilkreis möglichst klein und konstant sein, z.ß. 0,04 +/-0,01 mm. Um dies zu erreichen, ordnet man das Wellenlager mit Haupt- und Stutzlager in einem möglichst stabilen Träger an, und die Anschlussflächen des Haupt-und Stützlagers werden sehr genau bearbeitet. Bei diesem Verfahren werden dann die Lager montiert, und der Winkelsensor wird jedes mal auf die erforderlichen engen Abstände eigestellt. Da man bei derartigen Winkelablesungen je nach verlangter Genauigkeit auch mehrere Sensoren einsetzt, und da andererseits im Träger auch viele andere Baugruppen montiert werden müssen, ist bei den genannten Vorrichtungen zur Lagerung einer Welle der Aufwand sehr gross.

Aufgabe der Erfindung ist es, eine Vorrichtung zur Lagerung einer Welle zu finden, bei welcher die Winkelablesung unabhängig vom späteren Träger zusammen mit der Welle und dem Lagerflansch montiert und einsatzfertig justiert werden kann.

Diese Aufgabe wird bei einer Lagerungsvorrichtung der eingangs genannten Art dadurch gelöst, dass die Welle im Hauptlager über einen Zwischenträger gelagert ist, welcher mindestens zwei axial beabstandete Wellenführungen aufweist, dass der Zwischenträger am Träger derart befestigt ist, dass er um eine erste, zur Wellenachse senkrechte Achse bezüglich des Trägers wesentlich grössere Kippbewegungen ausführen kann, als um eine zweite, zur Wellenachse und zur ersten Achse senkrechte Achse und dass die beiden Wellenführungen derart ausgebildet sind, dass die Welle um eine dritte, zur zweiten Achse parallele Achse bezüglich des Zwischenträgers wesentlich grössere Kippbewegungen ausführen kann, als um eine vierte, zur ersten Achse parallele Achse. Vorteilhafte Weiterbildungen sind Gegenstand der Unteransprüche.

Ein Ausführungsbeispiel der Erfindung wird im Folgenden anhand der Figuren der Zeichnung beschrieben. Es zeigen :

Fig. 1 einen Schnitt durch eine erfindungsgemässe Lagerung einer Welle, sowie durch deren Träger längs einer in Fig. 2 mit A-A bezeichneten Linie,

Fig. 2 einen Schnitt durch die Lagerung gemäss Fig. 1 längs einer in Fig. 1 mit B-B bezeichneten Linie,

Fig. 3 einen Schnitt durch die Lagerung gemäss Fig. 1 längs einer in Fig. 1 mit C-C bezeichneten Linie,

Fig. 4 einen Schnitt durch einen Teil der in Fig. 1 dargestellten Lagerung, welche mit Rollagern ausgerüstet ist,

Fig. 5 einen Schnitt durch einen Teil der in Fig. 1 dargestellten Lagerung, welche mit Führungsstücken zur axialen Führung der Welle ausgerüstet ist und

Fig. 6 einen Schnitt durch eine Lagerung wie in Fig. 1 dargestellt, längs einer in Fig. 1 mit C-C bezeichneten Linie, wobei die Lagerung aber mit zwei seitlichen Begrenzungsnasen für die Lage der Welle ausgerüstet ist.

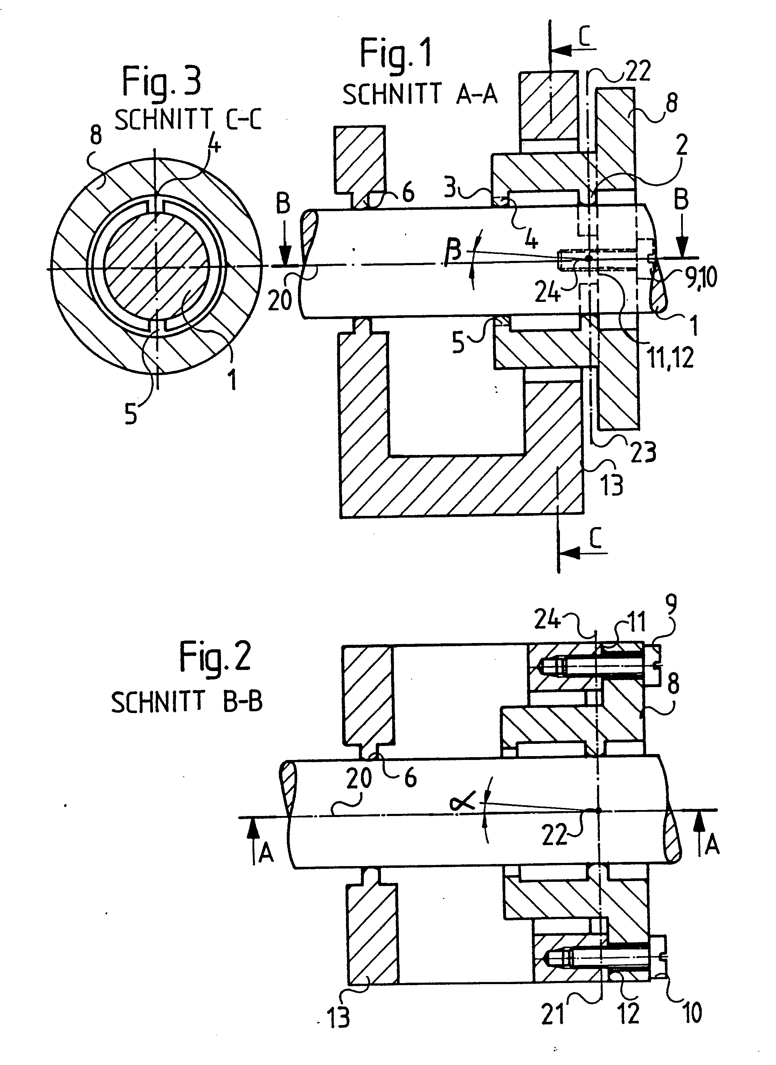

In Fig. 1 ist eine Welle 1 dargestellt, welche über einen Zwischenträger 8 in einem Träger 13 gelagert ist. Der Träger 13 kann eine Theodolitenstütze sein. Die Welle 1 ist in einer ersten Wellenführung 2 des Zwischenträgers 8 in Form eines Gleitlagers rundum geführt, während eine zweite Wellenführung 3 des Zwischenträgers 8 nur oben und unten mittels zweier, in der Wellenführung 3 diametral angeordneter Nasen 4 und 5 führt. Der Zwischenträger 8 ist mittels je einer Schraube 9 und 10 auf je einer kleinen Auflagefläche 11 und 12 des Trägers 13 so befestigt, dass der Zwischenträger 8 bei kleinen Verkippungen der Welle 1 um einen mit beta bezeichneten Winkel um eine in Fig. 2 mit 21 bezeichnete Achse z.B. infolge Verlagerung eines Stützlagers 6 infolge Spannungsausgleich oder Temperaturausdehnung im Träger 13 dieser Verkippung ohne Zwang folgen kann.

Verschiebt sich das Stützlager 6 aus den genannten Gründen seitlich, so kann die Welle 1 im Zwischenträger 8 dieser Verkippung - um einen in Fig. 2 mit alpha bezeichneten Winkel und um eine Achse 22 - ebenfalls ohne Zwang folgen, weil die Führung in der Wellenführung 3 nur oben und unten durch die Nasen 4 und 5 erfolgt.

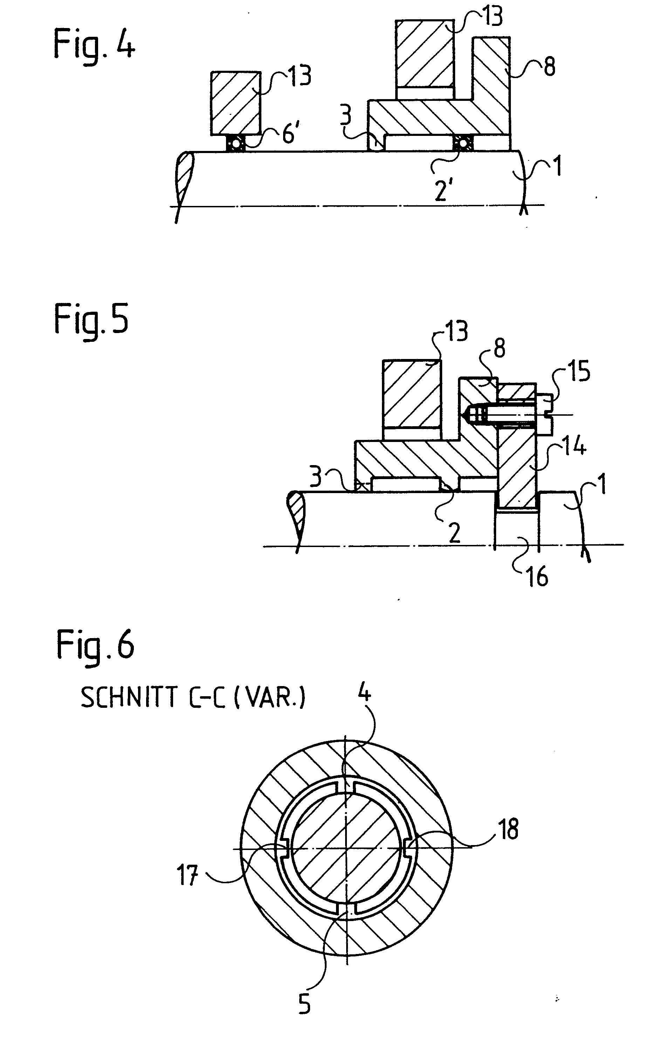

Die Erfindung ist nicht auf das vorstehend beschriebene Ausführungsbeispiel beschränkt. So können das Haupt- und das Stützlager anstelle von Gleitlagern auch mit Rollagern, z.B. Kugellagern 2', 6', wie in Fig. 4 dargestellt, ausgerüstet sein. Auch können die Gleitbahnen der Gleitlager teilweise taschenförmige Ausnehmungen aufweisen und nur längs bestimmter Sektoren ausgebildet sein. Weiterhin ist es vorteilhaft, die beschriebene Wellenlagerung mit Führungsstücken 14 zu kombinieren, welche mit Schrauben 15 am Zwischenträger 8 befestigt sind wie in Fig. 5 dargestellt. Die Führungsstücke 14 greifen in einen entsprechenden Einstich 16 der Welle 1 ein, damit dieselbe auch in axialer Richtung einwandfrei geführt ist. Schliesslich kann es notwendig sein, die seitliche Verkippung der Welle 1 um die Achse 22 zu begrenzen, indem zusätzlich zu den Nasen 4 und 5 auch seitlich begrenzende Nasen 17, 18 vorhanden sind, wie in Fig. 6 dargestellt. Dann lässt sich auch nach Entfernen des Stützlagers 6 die Verkippung der Welle 1 um den Winkel alpha in zulässigen Grenzen halten.

## Ansprüche

1. Vorrichtung zur Lagerung einer Welle (1) in einem Träger (13) mit einem Hauptlager (2, 3) und einem Stützlager (6), dadurch gekennzeichnet, dass die Welle (1) im Hauptlager (2, 3) über einen Zwischenträger (8) gelagert ist, welcher mindestens zwei axial beabstandete Wellenführungen (2, 3) aufweist, dass der Zwischenträger (8) am Träger (13) derart befestigt ist, dass er um eine erste, zur Wellenachse (20) senkrechte Achse (21) bezüglich des Trägers (13) wesentlich grössere Kippbewegungen ausführen kann, als um eine zweite, zur Wellenachse (20) und zur ersten Achse (21) senkrechte Achse (22) und dass die beiden Wellenführungen (2, 3) derart ausgebildet sind, dass die Welle (1) um eine dritte, zur zweiten Achse (22) parallele Achse (23) bezüglich des Zwischenträgers (8) wesentlich grössere Kippbewegungen ausführen kann, als um eine vierte, zur ersten Achse (21) parallele Achse (24).

2. Vorrichtung gemäss Anspruch 1, dadurch gekennzeichnet, dass der Zwischenträger (8) am Träger (13) mittels Befestigungselementen (9, 10) über hinreichend kleine, auf der ersten Achse (21) diametral und senkrecht zur Wellenachse (20) angeordnete Auflageflächen (11, 12) befestigt ist.

3. Vorrichtung gemäss Anspruch 1, dadurch gekennzeichnet, dass die Welle (1) in der einen Wellenführung (2) radial rundum geführt und in einer zweiten Wellenführung (3) nur in Richtung der zweiten Achse (22) mittels zweier, in der Wellenführung (3) diametral angeordneter erster Nasen (4, 5) radial geführt ist.

4. Vorrichtung gemäss Anspruch 3, gekennzeichnet durch zwei zweite Nasen (17, 18), welche in der Wellenführung (3) diametral in Richtung der vierten Achse (24) angeordnet sind und die Lage der Welle (1) in Richtung der vierten Achse (24) auf einen maximal zulässigen Bereich begrenzen.

5. Vorrichtung gemäss Anspruch 1, dadurch gekennzeichnet, dass die Welle (1) einen umlaufenden Einstich (16) aufweist und dass am Zwischenträger (8) fixierbare Führungsstücke (14) vorhanden sind, welche in den Einstich (16) eingreifen und eine axiale Verschiebung der Welle (1) bezüglich des Zwischenträgers (8) verhindern.

6. Vorrichtung gemäss Anspruch 3, dadurch gekennzeichnet, dass in der einen Wellenführung (2) und im Stützlager (6) Roll-Lager eingesetzt sind.

EP 0 369 416 A2

Fig.3
SCHNITT C-C

Fig.1
SCHNITT A-A

Fig.2
SCHNITT B-B

EP 0 369 416 A2

**Fig. 4**

**Fig. 5**

**Fig. 6**

SCHNITT C–C (VAR.)